(19) Europäisches Patentamt / European Patent Office / Office européen des brevets

(11) **EP 1 906 745 B1**

(12) **EUROPEAN PATENT SPECIFICATION**

(45) Date of publication and mention
of the grant of the patent:
**14.09.2011 Bulletin 2011/37**

(51) Int Cl.:
*A23F 3/30* (2006.01)     *A23F 5/40* (2006.01)
*A23L 2/395* (2006.01)     *A23L 3/44* (2006.01)

(21) Application number: **06762436.1**

(22) Date of filing: **04.07.2006**

(86) International application number:
**PCT/EP2006/006579**

(87) International publication number:
**WO 2007/009600 (25.01.2007 Gazette 2007/04)**

(54) **BEVERAGE PRECURSOR AND PROCESS FOR MANUFACTURE THEREOF**

GETRÄNKE-VORPRODUKT UND VERAHREN ZU SEINER HERSTELLUNG

PRECURSEUR DE BOISSON ET PROCESSUS DE FABRICATION DE CELUI-CI

(84) Designated Contracting States:
**AT BE BG CH CY CZ DE DK EE ES FI FR GB GR HU IE IS IT LI LT LU LV MC NL PL PT RO SE SI SK TR**

(30) Priority: **22.07.2005 EP 05254599**

(43) Date of publication of application:
**09.04.2008 Bulletin 2008/15**

(73) Proprietors:
• **Unilever PLC**
  **London**
  **EC4Y 0DY (GB)**
  Designated Contracting States:
  **CY GB IE**
• **Unilever N.V.**
  **3013 AL Rotterdam (NL)**
  Designated Contracting States:
  **AT BE BG CH CZ DE DK EE ES FI FR GR HU IS IT LI LT LU LV MC NL PL PT RO SE SI SK TR**

(72) Inventors:
• **GRIFFITHS, Allen,**
  **Unilever R & D Colworth**
  **Bedford,**
  **Bedfordshire MK44 1LQ (GB)**
• **ORMEROD, Andrew Paul,**
  **Unilever R & D Colworth**
  **Bedford,**
  **Bedfordshire MK44 1LQ (GB)**
• **RUSSELL, Alison Louise,**
  **Unilever R & D Colworth**
  **Bedford,**
  **Bedfordshire MK44 1LQ (GB)**
• **WANTLING, Simon David,**
  **Unilever R & D Colworth**
  **Bedford,**
  **Bedfordshire MK44 1LQ (GB)**

(74) Representative: **Clarke, Christopher John**
  **Unilever Patent Group**
  **Colworth House**
  **Sharnbrook**
  **Bedford MK44 1LQ (GB)**

(56) References cited:
**DE-A1- 19 847 934     DE-A1- 19 927 963**
**ES-A1- 2 230 997     US-A- 4 353 927**
**US-A1- 2003 044 505**

• PATENT ABSTRACTS OF JAPAN vol. 012, no. 176 (C-498), 25 May 1988 (1988-05-25) & JP 62 282551 A (MASANORI ARAKI), 8 December 1987 (1987-12-08)
• PATENT ABSTRACTS OF JAPAN vol. 004, no. 106 (C-020), 30 July 1980 (1980-07-30) & JP 55 068246 A (OMISHA TSUNEE; others: 01), 22 May 1980 (1980-05-22)
• PATENT ABSTRACTS OF JAPAN vol. 010, no. 350 (C-387), 26 November 1986 (1986-11-26) & JP 61 152239 A (AMANO JITSUGYO KK), 10 July 1986 (1986-07-10)
• PATENT ABSTRACTS OF JAPAN vol. 1996, no. 01, 31 January 1996 (1996-01-31) & JP 07 236426 A (HAYASHIKAZUJI KK), 12 September 1995 (1995-09-12)
• PATENT ABSTRACTS OF JAPAN vol. 015, no. 222 (M-1121), 6 June 1991 (1991-06-06) & JP 03 063481 A (HARUMI YOKOGAWA), 19 March 1991 (1991-03-19)

- **PATENT ABSTRACTS OF JAPAN vol. 016, no. 258 (M-1264), 11 June 1992 (1992-06-11) & JP 04 062365 A (HIROSHI MIKAMI; others: 01), 27 February 1992 (1992-02-27)**
- **PATENT ABSTRACTS OF JAPAN vol. 005, no. 132 (C-068), 22 August 1981 (1981-08-22) & JP 56 068351 A (MORINAGA & CO LTD), 9 June 1981 (1981-06-09)**
- **PATENT ABSTRACTS OF JAPAN vol. 010, no. 350 (C-387), 26 November 1986 (1986-11-26) & JP 61 152238 A (AMANO JITSUGYO KK), 10 July 1986 (1986-07-10)**

**Description**

<u>Technical Field of the Invention</u>

The present invention relates to precursors for the production of beverages such as tea, coffee and hot chocolate. More specifically the present invention relates to blocks for use in preparing beverages which contain inclusions such as leaves and fruits. The present invention also relates to the manufacture of such beverage precursors.

<u>Background of the Invention</u>

Beverages based on plants such as tea, coffee and cocoa have been popular throughout the world for hundreds of years. Traditionally such beverages are produced by infusing beverage plant material (e.g. tea leaves, coffee beans etc.) in hot water and separating the aqueous plant extract from the remaining insoluble plant material. It has also been traditional to vary the flavour of the beverages by the inclusion of aromatic plant material such as mint leaves, lemon slices and vanilla pods.

Today such beverages can be prepared by more convenient methods which dispense with the need for manipulation of insoluble plant material by the end-user or consumer. In particular, the beverages can be prepared from instant powders or granules which are free from insoluble plant material and so dissolve rapidly and completely on contact

with hot water. PAJ abstract 61152239 discloses a block comprising dried solid tea.

Instant coffee and tea powders are usually produced from aqueous extracts made in the traditional way. These aqueous extracts may then be subjected to a clarification step (such as "de-creaming" used in the manufacture of tea powders) and/or concentrated under vacuum or by reverse osmosis. In the case of granular coffee production, the aqueous extract may also be foamed at this point. The resulting extract is then dried by either spray-drying or freeze-drying. If freeze-drying is used, the extract is usually frozen as a thin layer on a freezing belt before being ground in the frozen state. The resulting granules are usually poured into trays and freeze-dried at low pressure.

Whilst such powdered and granular beverage precursors have proved very popular, they suffer from several drawbacks. Firstly, the intensive processing applied in their manufacture leads to a loss of volatile material which results in an inferior flavour in the final beverage compared with traditional beverages. Also, the free-flowing nature of these beverage precursors necessitates their distribution in heavy bulk containers and also requires the consumer to portion the precursor by use of a spoon or other implement. There is consequently a possibility of wide fluctuation in the strength and/or quality of the final beverage as well as frequent loss and mess through spillage. Furthermore, the use of bulk containers requires that all of the contents are exposed each time that the container is opened to remove a portion. As a result, beverage precursor granules which remain in the container for several weeks may show a marked deterioration due to loss of flavour and aroma, production of bad flavours owing to oxidation processes and loss of flowability owing to moisture absorption.

Such beverage precursors also suffer from a further drawback when used to prepare beverages with added inclusions such as leaves and fruits, in that it is still necessary for the consumer to add the inclusions separately. This often requires sectioning and/or slicing portions (e.g. from fruits) which adds significantly to the time and inconvenience of preparing the beverage and makes it unlikely that a person having a single serving will go to the trouble of adding such inclusions. Also, even if the manufacturer were to include dried inclusions along with the beverage precursor, the small size of the powder particles or granules (typically of the order of a mm or less) makes it impractical to include large (or even whole) pieces of dried aromatic plant material along with the beverage precursor. This is because free-flowing powders provide little structural support to fragile inclusions such as dried leaves and fruits which thus disintegrate during transit.

There have been previous attempts to overcome some of the disadvantages mentioned above by providing soluble plant extracts in the form of tablets. Typically, the tablets are made by compressing dry powders or granules (e.g. as described above). Unfortunately, the use of such beverage tablets for the delivery of inclusions has not successfully been exploited to date. This is probably because of the fact that the compression forces involved in the manufacture of tablets would necessarily disintegrate most inclusions, such as large (or whole) pieces of dried leaves or fruit.

Therefore, we have identified that there is a need for a new type of beverage precursor that allows for the convenient preparation of beverages comprising inclusions. Such beverage precursors may also be suitable for delivering quality and/or health benefits to the consumer.

<u>Tests and Definitions</u>

**Beverage**

As used herein the term "beverage" refers to a substantially aqueous drinkable composition suitable for human consumption.

## Plant extract

As used herein, the term "plant extract" refers to solids extractable in boiling water from beverage plant material such as tea leaves, coffee beans or cocoa beans. Thus a plant extract contains most of the active and flavour components of a beverage. Typically the plant extract will comprise components such as caffeine, polyphenols (e.g. flavonols [catechins], flavonol glycosides, leucoanthocyanins, phenolic acids etc.) and aroma compounds (acids, alcohols, aldehydes, esters, hydrocarbons, lactones etc.). Such plant extracts are well known in the art and are usually obtained by drying an aqueous extract obtained from treating plant material with hot (typically at least 30°C, preferably at least 60°C, more preferably at least 90°C) water. The plant material may be raw or may have undergone a processing step such as roasting, withering and/or fermentation prior to extraction.

For example the plant extract may be tea solids extracted from green leaf tea, black leaf tea, oolong leaf tea or mixtures thereof. The method of preparing such leaf teas is well known to those skilled in the art. Generally, to prepare black leaf tea, fresh green leaves of the plant *Camellia sinensis* are withered (subjected to mild drying), comminuted, fermented (in which enzymes in the leaf tea oxidise various substrates to produce brown-coloured products) and then fired (to dry the tea leaves). Green leaf tea is not exposed to the fermentation process. Partial fermentation may be used to produce intermediate-type teas known as "oolong" tea. Plant extract may be prepared from any of these leaf materials, e.g. by contacting the leaf material with hot water, separating out the insoluble material and drying the remaining extract.

## Beverage Precursor

A beverage precursor is defined as a fabricated composition suitable for preparing a beverage.

## Block

As used herein, the term "block" is defined as a cohesive solid mass and thus encompasses (but is not limited to) such terms as cube, tablet, pellet, ingot, bar and brick.

## Distributing

References herein to "distributing" a substance in an aqueous medium are to be understood as meaning that the substance is mixed with the aqueous medium by dissolving and/or dispersing the substance in the aqueous medium.

## Water-soluble carrier

The term "water-soluble carrier" is defined as a solid which is substantially soluble in boiling water. Typically a majority of the water-soluble carrier will be one or more hydrophilic solid components such as saccharides and proteins. A minor portion (e.g. less than 30% by weight of the carrier, preferably less than 10%, more preferably less than 5%) may, however, be a hydrophobic component such as fat, provided that the hydrophobic component is suitably emulsified to be dispersible in boiling water.

## Fracture strength

The fracture strength of a beverage block is defined as the stress at fracture measured as follows:

At least three representative cuboid samples measuring 3.25 x 2.3 x 2.1 cm of the beverage precursor block are tested at 20°C using an Instron™ Universal Testing machine. A flat plate compression test is performed on each sample in the direction perpendicular to the 3.25 x 2.3 cm faces of the sample. A crosshead speed of 100 mm/min is used to a displacement of 15 mm, with a data sampling rate of 50 points/s. The maximum force recorded is then taken as the Failure Force (i.e. maximum force of the failure peak). The Fracture Strength of the block is calculated by dividing the mean Failure Force of the samples by the cross-sectional Area (3.25 x 2.3 cm) i.e. Fracture Strength (kN $m^{-2}$) = Failure Force (kN) / Area ($m^2$) = Failure Force (kN) / 0.00074 $m^2$.

## Freezing Rate

As defined herein, the freezing rate of a portion of mixture is defined as follows:

$$\text{Freezing rate } = 10 \text{ K } / t \text{ min,}$$

wherein t is the time taken for the centre of the portion to cool from a temperature of 0°C to -10°C.

**Insoluble inclusions**

As used herein, the term "insoluble inclusion" refers to a coherent mass which is insoluble in boiling water. The insoluble inclusion should be of a size and solubility such that the insoluble inclusion is visible, as a discrete piece or pieces, in a beverage prepared by contacting a block comprising the inclusion with boiling water, after substantially all of the plant extract and water-soluble carrier (if present) included in the block has dissolved and/or dispersed in the boiling water. Preferably the insoluble inclusion is such that it does not dissolve when immersed for 3 minutes in 200 ml of water at a temperature of 95°C.

**Size**

Unless stated otherwise, the size of a block or inclusion is quoted as the maximum linear dimension of the block or inclusion, i.e. the maximum length in any dimension.

Summary of the Invention

We have found that some or all of the disadvantages of prior systems may be ameliorated by providing beverage precursors in which plant extract and insoluble inclusions are formed into a coherent solid mass.
Thus, the present invention provides a dried beverage precursor block weighing at least 0.2 g, and comprising:

(A) plant extract; and
(B) at least on insoluble inclusion.

Unlike previous beverage precursors, the beverage precursor blocks of the present invention dispense with the need for portioning of the plant extract (e.g. by spooning granular precursor) and/or portioning of the inclusion material (e.g. by section or slicing a fruit). The need for portioning of the plant extract can be minimised when the block is of a large mass.
The present invention also provides a packaged beverage precursor comprising at least one of the beverage precursor blocks of the invention.
The beverage precursor blocks of the present invention are intended for use in preparing a beverage. Thus the present invention also provides a method of preparing a beverage comprising the steps of:

(a) providing the beverage precursor block; and
(b) contacting the block or a part thereof with an aqueous medium.

In a further aspect, the present invention provides a process for the manufacture of a beverage precursor block comprising the steps of:

(i) providing aqueous premix comprising plant extract and preferably a water-soluble carrier;
(ii) providing one or more insoluble inclusions;
(iii) combining the one or more insoluble inclusions with the aqueous premix to form a mixture; and
(iv) drying the mixture.

Such a process allows for the formation of the block without the need for an external force (such as compression) or a chemical adhesive because the plant extract becomes bonded to the inclusions during drying of the mixture. The water-soluble carrier may augment the strength of the block and/or improves flavour retention during the drying step.
The present invention also provides the beverage block of the invention obtained and/or obtainable by the process of the invention.

<u>Detailed Description of the Invention</u>

**Composition of the block**

*Plant extract*

For optimum convenience, the beverage precursor block should contain sufficient plant extract such that no more than 5 blocks are required to prepare a single 200 g serving of beverage. Preferably the amount of plant extract in the block is such that only 1 or 2 blocks are required to prepare a single serving. Most preferably a single block is sufficient to prepare a single serving. Thus it is preferred that the block comprises plant extract in an amount of at least 2% by weight of the block, more preferably at least 5% and optimally from 10 to 50%. Preferably the block comprises at least 0.05 g of plant extract, more preferably at least 0.1 g and optimally between 0.2 and 2 g.

Examples of plant extract include tea solids, coffee solids, cocoa solids, camomile solids, nettle solids, mint solids, rooibos solids, fruit solids and mixtures thereof. Particularly preferred plant extracts are fruit solids, tea solids, coffee solids, cocoa solids and mixtures thereof. The beverage precursor block most preferably comprises tea solids, and in one particularly preferred embodiment the only plant extract present is tea solids.

*Insoluble inclusions*

The inclusion may be any suitable insoluble entity that adds to the interest, excitement and/or enjoyment of the finished beverage and may be, for example, a confectionery piece such as a gelled sweet. In a particularly preferred embodiment the insoluble inclusions comprise plant material. The plant material may be selected from the group consisting of whole fruit, fruit pieces, whole leaves, leaf pieces, whole pods, pod pieces, whole seeds, seed pieces, whole beans, bean pieces, whole roots, root pieces, whole nuts, nut pieces, whole flowers, flower pieces and mixtures thereof. Particularly preferred are fruits (such as whole berries and/or citrus slices), pods (such as whole and/or parts of vanilla pods) and leaves (such as whole and/or parts of tea and/or mint leaves).

The inclusions may comprise plant material derived from the same plant as the plant extract and may, for example, comprise whole and/or parts of tea leaves (especially green tea leaves). In a preferred embodiment, however, the inclusions comprise at least 50% (more preferably at least 75%) by weight of the inclusions of a plant material derived from a plant other than the plant or plants from which the plant extract is derived. Most preferred is that the inclusions are substantially free from plant material derived from the same plant as the plant extract. In particular the inclusions may comprise less than 10% by weight of the inclusions (more preferably less than 1%) of tea leaves, coffee beans, cocoa beans or parts thereof:

As the insoluble inclusion should be of such a size that it is visible in a beverage, it is preferred that the insoluble inclusion has a size of at least 1 mm, more preferably 5 mm and most preferably at least 10 mm. In order that the inclusion benefits from the structural support of the other components of the block, it is preferred that the inclusion is of a size substantially the same or less than that of the remainder of the block. In particular it is preferred that the inclusions are smaller than 100 mm, more preferably smaller than 50 mm and most preferably smaller than 30 mm.

It is also preferable that the block comprises the inclusions in an amount of less than 60% by weight of the block, more preferably less than 50% and most preferably in an amount between 5 and 40%.

The block may comprise a plurality of inclusions, e.g., at least 2 inclusions, more preferably from 3 to 10 inclusions. In a preferred embodiment, however, the block comprises a single inclusion.

*Water-soluble carrier*

In a preferred embodiment, the block additionally comprises water-soluble carrier. The water-soluble carrier may enhance the fracture strength and/or flavour delivery of the blocks according to the invention. Thus it is preferable that a large proportion of the block comprises water-soluble carrier, i.e. the block comprises at least 40% water-soluble carrier by weight of the block, more preferably at least 50% and optimally from 60 to 90%.

It is preferable that the carrier is inert with respect to taste and flavour. In particular large amounts of salt should be avoided, i.e. the block should comprise less than 1% salt, more preferably less than 0.5 and most preferably less than 0.1% salt by weight of the block. This is because not only does salt interfere with the taste of the beverage but it may also decrease the solubility of the plant extract. The carrier may, however, comprise sugars (i.e. mono- and/or disaccharides) in an amount of up to 50% by weight of the carrier if a sweet tasting beverage is desired.

In a particularly preferred embodiment the carrier comprises a biopolymer in an amount of at least 50% by weight of the carrier, more preferably at least 75% and optimally between 90 and 100%. Biopolymers are found to be inert with respect to taste and flavour, have low hygroscopicity but are highly soluble and have suitable mechanical properties for strengthening the block. Preferably the biopolymer is selected from one or more of oilgosaccharides, polysaccharides and proteins. It is preferable, however that the block is substantially free from gelatin as gelatin provides a "gummy" mouthfeel to the beverage and is unsuitable for many consumers such as vegetarians. The preferred biopolymer is maltodextrin (i.e. hydrolysed starch) owing to its high water solubility, clean taste and fragrance-binding properties. The DE (dextrose equivalence) of the maltodextrin is preferably not too high as to impart a sweet taste and hygroscopic character to the block, nor too low such that the maltodextrin is insoluble. Thus it is preferred that the maltodextrin has a DE of between 4 and 60, more preferably between 10 and 40.

If a milky beverage is required, the carrier may comprises non-fat milk solids in an amount of at least 1% by weight of the carrier, more preferably in an amount of between 10 and 50% by weight of the carrier. The milk solids may be derived from any suitable source such as milk, skimmed milk and/or whey.

*Water*

In order to ensure maximum storage stability, it is preferred that the water content of the block is less than 30% by weight of the block, more preferably less than 15% and most preferably in the range of 1 to 10%.

*Minor additives and actives*

The block may also comprise other minor additives and actives, typically in an amount of less than 10% by weight of the block, and preferably in an amount of between 0.1 and 5% by weight of the block. Examples of minor additives include flavour compositions, spices and colourings. Examples of actives include nutritional actives such as minerals, vitamins and bioactive peptides/amino acids (such as theanine). The beverage precursor block of this invention is particularly suited for use as a delivery vehicle for nutritional and/or health actives.

**Properties of the block**

*Mass*

The need for portioning of the plant extract to prepare a beverage can be minimised when the block is of a large mass. Thus the block has a mass of at least 0.2 g, preferably at least 1 g, and most preferably at least 2 g. In order to avoid the blocks becoming too large for convenient storage (especially where the blocks have a low density) it is preferred that the block weighs less than 300 g, more preferably less than 100 g and most preferably less than 25 g.

*Shape*

The block may be any suitable shape and in one embodiment may substantially take the shape of the insoluble inclusion, e.g. the block may comprise an insoluble inclusion coated with the plant extract. In an alternative embodiment, the block may have a moulded shape of, for example, a fruit, leaf, nut, bean, heart, letter, number or logo. Alternatively, the block may comprise a plurality of sub-blocks, with neighbouring sub-blocks being joined by an area of relative weakness. Such an arrangement allows for the user to easily detach an intact sub-block from the remainder of the sub-blocks, the detached sub-block then being used to prepare a beverage while the remaining sub-blocks remain as a single block for easy storage.

*Dissolution rate*

It is preferred that the plant extract and water-soluble carrier (if present) should dissolve rapidly such that the block is dissolved in boiling water in less than 30 s without mechanical agitation (e.g. stirring). More preferably the block dissolves in less than 10 s and most preferably less than 5 s. Optimally the block dissolves instantaneously in boiling water (i.e., in less than 2.s).

*Density*

In order to provide especially rapid dissolution of the beverage precursor block in an aqueous medium when preparing a beverage, it is preferable that the block has a low density and/or a high porosity. Preferably the density of the block is less than 0.5 g ml$^{-1}$, more preferably less than 0.4 g ml$^{-1}$ and optimally between 0.05 and 0.3 g ml$^{-1}$. Blocks with such a low density do not require dispersing aids such as effervescing salts and preferably the block is substantially free of dispersing aids, more preferably the block contains less than 1% dispersing aid by weight of the block, most preferably less than 0.1%.

*Fracture Strength*

We have found that blocks with a fracture strength below 50 kPa are too friable to withstand the rigors of a normal distribution chain. Thus it is preferable that the block has a fracture strength of at least 60 kPa, more preferably at least 70 kPa, and most preferably in the range 80 to 1000 kPa.

## Packaging of the block

The present invention also provides a packaged beverage precursor, preferably comprising a plurality of the beverage precursor blocks of the invention. In a particularly preferred embodiment the block is packaged with one or more substantially identical blocks such that the packaged beverage precursor comprises a plurality of substantially identical blocks. By "substantially identical" is meant that the size, shape and composition of the blocks are substantially invariant between the blocks. Most preferable is that the packaged beverage precursor comprises a plurality of blocks with a substantially monodisperse size distribution, i.e. at least 50% of the blocks are the same size, more preferably at least 70% and optimally all of the blocks are the same size.

The blocks may be packed such that the packaged beverage precursor comprises the beverage precursor blocks in an amount of a single serving.

An advantage of the beverage precursor blocks of the present invention is that the blocks are not required to comprise insoluble beverage material that requires separation from the plant extract by the consumer or end user. As such it is not necessary to include the beverage block in an infusion package such as a tea bag. Thus in a preferred embodiment, the packaged beverage precursor comprises the beverage precursor block which is not enclosed in an infusion package.

## Use of the block to prepare a beverage

The beverage precursor blocks of the present invention are intended for use in preparing a beverage. Thus the present invention also provides a method of preparing a beverage comprising the steps of:

(a) providing the beverage precursor block; and
(b) contacting the block or a part thereof with an aqueous medium.

The present invention also provides a beverage obtained and/or obtainable by the method of the invention.

*Composition of the beverage*

Typically the beverage comprises at least 85% water, more preferably at least 90%, optimally between 95 and 98% by weight of the beverage. Preferably the beverage is a coffee-based beverage, a tea-based beverage and/or a cocoa-based beverage. Most preferably the beverage is tea.

*Aqueous medium*

The aqueous medium may be any edible liquid but is preferably selected from water and/or milk. Preferably also, during step (b) the aqueous medium is hot and has a temperature of at least 30°C, preferably at least 60°C, more preferably between 90 and 100°C. In an alternative embodiment, the aqueous medium is cold and has a temperature of less than 30°C, preferably less than 15°C, more preferably between 0 and 10°C.

*Method of contacting*

In a preferred embodiment, the block and aqueous medium are contacted in step (b) in a manner such that the plant extract and water-soluble carrier (if present) are distributed throughout the aqueous medium and the insoluble inclusions are visible as a discrete piece or pieces in the beverage.

In a preferred embodiment the beverage is a single serving and at least 100 g (preferably between 150 and 250 g) of the aqueous medium is contacted with less than 5 of the beverage blocks, more preferably less than 3 and most preferably a single block or part thereof.

The beverage precursor block (or part thereof) may be crumbled and/or disintegrated prior to step (b) to increase the surface area of beverage precursor in contact with the aqueous medium in step (b) and thus increase the rate of distribution therein.

If the beverage precursor block comprises a plurality of sub-blocks, then step (b) may comprise separating at least one of the sub-blocks from the beverage precursor block and contacting the at least one separated sub-block with the aqueous medium.

**The process**

The blocks of the present invention may be prepared by any suitable process. However, it is preferred that the beverage precursor block is manufactured by a process comprising the steps of:

(i) providing aqueous premix comprising plant extract and preferably a water-soluble carrier;
(ii) providing at least one insoluble inclusion;
(iii) combining the at least one insoluble inclusion with the aqueous premix to form a mixture; and
(iv) drying the mixture.

The process may comprise the additional step of packaging the beverage precursor block, preferably along with one or more additional beverage precursor blocks.

*Formation of the aqueous premix*

The aqueous premix may be provided by any suitable means and may, for example, be aqueous plant extract directly obtained from treating plant material with an aqueous medium. By "directly obtained" is meant that the aqueous extract is obtained without drying to a solid, but does not exclude the possibility of the aqueous extract having undergone a concentration step, e.g. by evaporation under vacuum, reverse osmosis or other suitable method. Preferably, however, step (i) comprises distributing the plant extract (and optionally the water-soluble carrier) in an aqueous medium thereby to form the aqueous premix as this provides for a more flexible process and allows for better control of the composition of the raw materials and therefore of the premix.

*Formation of the mixture*

The insoluble inclusions and aqueous premix may be combined in any suitable manner. For example the aqueous premix may be sprayed onto the surface of the inclusions. In a preferred embodiment, however, the inclusions are added to an excess of aqueous premix. More preferably the inclusions and premix are combined in a weight ratio of between 1:100 to 1:1.1, most preferably of between 1:10 to 1:2.
Preferably the inclusions are not in a dried form when they are combined with the aqueous premix, as we have found that if the inclusions and premix are dried together as a mixture then an especially strong bond is formed between the inclusions and plant extract. More preferably the inclusions have a water content prior to drying of at least 30% by weight of the inclusions, most preferably between 50 and 95%.

*Drying of the mixture*

In order to provide especially rapid dissolution of the beverage precursor block in an aqueous medium when preparing a beverage, it is preferable that the block has a low density and/or a high porosity. A low density is provided to some extent by voids formed by loss of water during the drying step (iv). Thus it is preferable that the aqueous premix comprises at least 50% water by weight of the premix, more preferably at least 60% and most preferably between 70 and 95%. Preferably also, formation of the block does not require a compression step (cf. a tabletting process) as then these voids remain in the final block.
In order to decrease the density of the block still further, the aqueous premix may be foamed, e.g. by whipping or use of a soluble gas (such as $CO_2$ or $N_2O$), to an overrun of at least 50%, preferably between 100 and 300%. However, we have found that satisfactory densities can be obtained without the need for foaming of the aqueous premix.
In order to ensure maximum storage stability, it is preferred that the mixture is dried in step (iv) such that the water content of the block is less than 30% by weight of the block, more preferably less than 15% and most preferably in the range of 1 to 10%.
Step (iv) may be conveniently accomplished by freeze-drying of the mixture. This is because sublimation of water during freeze-drying results in a particularly low density, highly porous block. We have found that when freeze-drying is used in the process of the present invention, it is advantageous to employ especially high rates of freezing, otherwise the mechanical strength of the blocks may become too low such that the blocks are extremely friable. This effect is particularly apparent when blocks comprising high levels of plant extract and water-soluble carrier are prepared. Without wishing to be bound by theory we believe that this weakening of the structure of the block is caused by an interaction between the water-soluble carrier and the plant extract. During freezing, both the plant extract and water-soluble carrier become concentrated in the non-frozen phase. At low rates of freezing, the long time spent in such a freeze-concentrated state, whilst still at a relatively high temperature, allows strong interactions to form between the extract and carrier which weakens the ability of the carrier to structurally support the block. When rapid rates of freezing are employed, however, the components of the premix become kinetically trapped before they have an opportunity to significantly interact in the freeze-concentrated state. Thus it is preferred that the mixture is frozen at a rate of at least 0.15 K min$^{-1}$, more preferably in the range of from 0.2 to 1 K min$^{-1}$ and optimally in the range of from 0.25 to 0.4 K min$^{-1}$.

The interaction between the carrier and the plant extract also appears to occur, to some extent, even prior to freezing. Therefore it is preferable that the time between steps (i) and (iv) is kept to minimum, i.e., drying should commence no more than 5 hours after forming the aqueous premix, more preferably no more than 2 hours, even more preferably no more than 1 hour and optimally between 0.1 and 30 minutes.

*Dividing out the portion*

In a particularly preferred embodiment, the process comprises the further step of:

(v) dividing out a cohesive portion of the mixture, the portion having a dry mass of at least 0.2 g and the portion forming the block when dried.

Inclusion of such a step ensures that the blocks are formed without finely dividing the mixture into grains or granules and so the blocks have a more coherent continuous solid structure than prior blocks which gives superior mechanical strength. This strength may be augmented by the presence of water-soluble carrier. The size of the blocks is also sufficient to provide relatively large inclusions. Furthermore, blocks obtained by the process are found to retain a more intense flavour than previous blocks, possibly because the blocks obtained by the process are not in a finely divided state during the drying step. This flavour retention may also be augmented by the presence of the water-soluble carrier.

The cohesive portion of the mixture may be divided out by any suitable means provided that the portion itself is not finely divided such that its dry mass is below 0.2 g. It is preferred that the portion of mixture used to form the block has a dry mass of at least 1 g, more preferably at least 2 g. It is also preferred that the portion has a dry mass of less than 300 g, more preferably less than 100 g and most preferably less than 25 g.

Thus, unlike previous processes, it is not necessary to assemble the blocks from finely divided solid premix (i.e. by pressing powders or granules). For example, step (iv) may be performed before step (V), e.g., the mixture may be dried in bulk and the portion cut, as the block, from the dried mixture. The process steps may also be performed in the order (v) and then (iv), e.g. the portion may be divided out by dosing the portion as liquid mixture into a mould prior to drying. Alternatively, the mixture may be frozen in bulk (e.g. by slush-freezing) and the portion cut from the frozen mixture prior to drying in step (iv) (e.g. by freeze-drying). An advantage of dividing out the portion prior to drying is that the liquid (or slush-frozen) portion may be easily moulded into any desired shape with little wastage of mixture.

Description of Preferred Embodiments and Examples

The present invention will be further described with reference to the following preferred embodiments and examples along with the accompanying drawings in which:

Figure 1a is a perspective view of a beverage precursor block according to the invention having raspberries and vanilla pods as inclusions;

Figure 1b is a perspective view of a second beverage precursor block according to the invention having a tea leaf as an inclusion;

Figure 1c is a perspective view of a third beverage precursor block according to the invention having a lemon slice as an inclusion;

Figure 2 is a perspective view of a fourth beverage precursor block according to the invention, comprising a plurality of sub-blocks;

Figure 3 is an elevational view, partly in section, of a fifth beverage precursor block according to the invention, having a citrus slice as an inclusion;

Figure 4 is a sectional view of a sixth beverage precursor block according to the invention having a berry as an inclusion;

Figure 5a is a plan view of a seventh beverage precursor block according to the invention having a lemon slice as an inclusion;

Figure 5b is a side elevational view of the beverage precursor block of Figure 5a;

Figure 6a is a plan view of a further beverage precursor block according to the invention having a plurality of leaves as inclusions; and

Figure 6b is a sectional side view of the beverage precursor block of Figure 6a.

**Example 1**

This example demonstrates a process and tea-based beverage precursor blocks according to the invention, wherein the insoluble inclusions are raspberries and vanilla pods. This example also demonstrates the effect of freezing rate on the fracture strength of freeze-dried blocks.

*Materials*

Maltodextrin was GLUCIDEX™21 supplied by Roquette UK Ltd (Corby, UK) and had a DE of 20.
Instant tea powder was PG Tips™ Instant supplied by Unilever Bestfoods UK Ltd.
Raspberries were obtained fresh and whole from a local supermarket.
Vanilla pods were obtained whole from a local supermarket and were cut into 5 mm pieces before use.

*Formulation*

The composition of the aqueous premix (prior to incorporation of inclusions) and the final dried block are given in Table 1.

TABLE 1

| Ingredient | Composition of Aqueous Premix (% w/w) | Composition of Block |
|---|---|---|
| Maltodextrin | 20.0 | 2.83 g |
| Instant Tea Powder | 2.1 | 0.30 g |
| Raspberries | - | 2 × Whole |
| Vanilla Pods | - | 1 × 5 mm Piece |
| Water | 77.9 | < 0.4 g |

*Process*

Aqueous premix (170 g) was prepared by adding boiling water to maltodextrin and tea powder in a 250 ml beaker. The premix was then stirred vigorously by hand until the maltodextrin and tea powder were dissolved, before being left to stand for 10 minutes at room temperature (20°C).
Three identical domestic ice cube trays were then selected, each tray having 12 moulds, with each mould having a volume of 20 ml. Two raspberries and one piece of vanilla pod were placed into each of the moulds. Each mould was then filled to the brim with premix.
One of the trays (batch A) was then placed in a freezer (Borolabs™ Sparkfree RLVF0420) operating at a set temperature of -25°C and frozen for 24 hours. Another of the trays (batch B) was placed in a conventional air-blast freezer (Watford Refrigeration & Air Conditioning blast freezer operating at a temperature of - 30°C and air speed of 3.5 m/s) and blast-frozen for 5 hours. The third tray (batch C) was placed in a -80°C lab freezer (Sanyo Biomedical upright -86°C freezer) for 24 hours. All three batches were stored in the -80°C lab freezer for 24 hours prior to freeze-drying.
The frozen blocks were removed from the trays and freeze-dried for 48 hours in a Vitris FreezeMobile™ 25EL freeze-drier operating at -80°C.

*Properties of the Blocks*

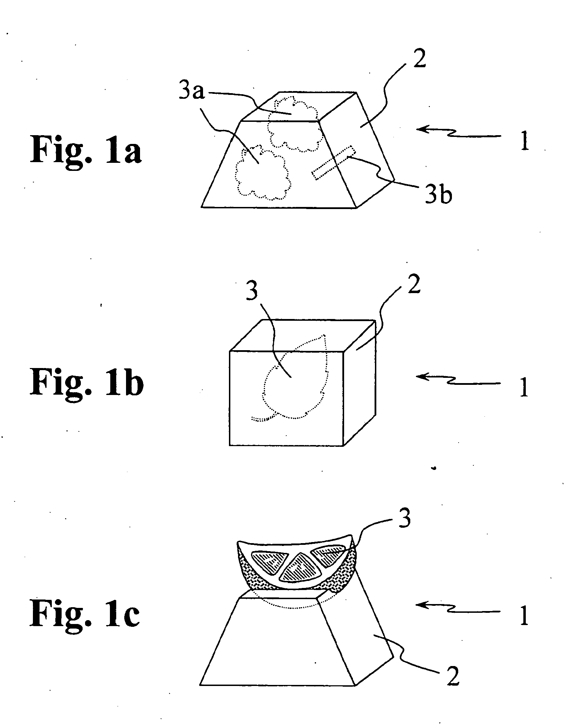

The resulting blocks had a structure similar to that shown in Figure 1a. Each block (1) consisted of a matrix of dried premix (2) in the shape of a truncated pyramid. Included within the dried premix (2) were two dried raspberries (3a) and a dried piece of vanilla pod (3b). All blocks had a mass of approximately 4 g and a density of approximately 0.25 g ml$^{-1}$.

The blocks of batch A were found to be extremely friable and weak whilst those of batches B and C had good strength. This demonstrates that high freezing rates result in improved strength of freeze-dried blocks.

A block from each batch was used to prepare a beverage by placing the block in a cup and pouring 100 ml of boiling water over the block. Each block was observed to dissolve instantaneously (i.e. in less than 2 s) without stirring, to leave a transparent tea-coloured beverage on which were floating two raspberries and a piece of vanilla pod. The raspberries had the appearance, aroma and taste of fresh raspberries and the beverage overall was found to give a high sensory impact both retro- and ortho-nasal.

## Example 2

This example demonstrates a process and tea-based beverage precursor blocks according to the invention, wherein the insoluble inclusions are fresh green tea leaves.

*Materials*

Maltodextrin was GLUCIDEX™21 supplied by Roquette UK Ltd (Corby, UK) and had a DE of 20. Gelatin was 240 bloom supplied by Extraco AB (Klippan, Sweden). Green tea powder was green tea extract supplied by Messes Premium Exports Ceylon Ltd (Comombo, Sri-Lanka).

Tea leaves were freshly-picked from the tea gardens at Unilever R&D Colworth (Bedford, UK) and were used whole.

*Formulations*

The composition of the aqueous premix (prior to incorporation of inclusions) is given in Table 2.

TABLE 2

| Ingredient | Composition of Aqueous Premix (% w/w) |
|---|---|
| Maltodextrin | 4.50 |
| Gelatin | 1.50 |
| Green Tea Powder | 0.12 |
| Water | 93.88 |

*Process*

The blocks were manufactured in an identical manner to batch A in Example 1 except: the gelatin was also added to the beaker and dispersed in the boiling water; instead of raspberries and vanilla pods, a single tea leaf was added to each mould; and the tray had cubic moulds with a volume of around 40 ml rather than truncated-pyramidal moulds.

*Properties of the Blocks*

The resulting blocks had a structure similar to that shown in Figure 1b. Each block (1) consisted of a cube of matrix of dried premix (2). Included within the dried premix (2) was a dried tea leaf (3).

A block was used to prepare a beverage by placing the block in a cup and pouring 100 ml of boiling water over the block. The block was observed to dissolve instantaneously without stirring, to leave a transparent green tea beverage on which a tea leaf was floating. The tea leaf had the appearance and aroma of a freshly-cut leaf.

**Example 3**

This example demonstrates a process and beverage precursor blocks according to the invention, wherein insoluble inclusions (lemon slices) are added to the beverage precursor blocks.

*Materials*

Maltodextrin was GLUCIDEX™21 supplied by Roquette UK Ltd (Corby, UK) and had a DE of 20.
Black tea powder was Finlays hot water soluble tea Std.609 supplied by Finlay Tea Solutions UK Ltd (London, UK). Fresh lemons were bought from a local supermarket and were sliced ready for use.

*Formulations*

The composition of the aqueous premix (prior to incorporation of inclusions) and the final dried block are given in Table 3.

TABLE 3

| Ingredient | Composition of Aqueous Premix (% w/w) | Composition of Block |
|---|---|---|
| Maltodextrin | 20.0 | 2.00 g |
| Black Tea Powder | 3.5 | 0.35 g |
| Lemon Slices | - | 1 slice |
| Water | 76.5 | < 0.4 g |

*Process*

The blocks were manufactured in an identical manner to batch B in Example 1 except that the tray used was an "ice & slice" tray (supplied by Progressive International Corp) with each mould holding one lemon slice half submerged in premix. Therefore, instead of raspberries and vanilla pods, a single lemon slice was added to each mould.

*Properties of the Blocks*

The resulting blocks had a structure similar to that shown in Figure 1c. Each block (1) consisted of a matrix of dried premix (2). Partly embedded within the dried premix (2) was a dried lemon slice (3). Each block had a mass of approximately 3.5 g.
A block was used to prepare a beverage by placing the block in a cup and pouring 100 ml of boiling water over the block. The block was observed to dissolve instantaneously without stirring, to leave a transparent tea-coloured beverage on which a lemon slice was floating. The lemon slice had the appearance and aroma of freshly-sliced lemon.

**Example 4**

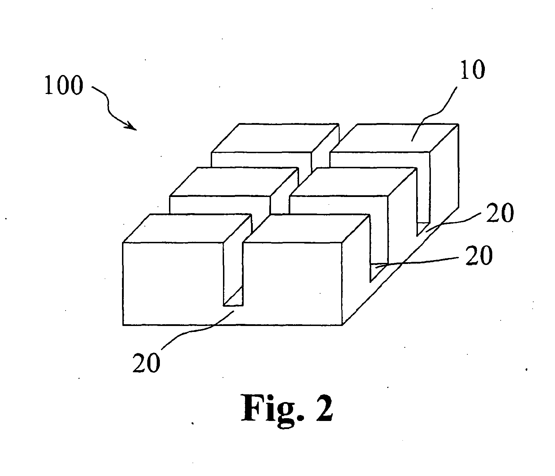

This example demonstrates a beverage precursor block according to the invention which comprises sub-blocks and its use to prepare a beverage.
The block (100) is shown in Figure 2 and comprises a plurality of sub-blocks (10), each sub-block (10) neighbouring at least two other of the sub-blocks (10) to which it is joined by an area of relative weakness (20).
The block (100) may be formed, for example, by freezing liquid premix in a suitable mould and then freeze-drying the resulting frozen portion. The composition of the premix may be as described in any one of the previous examples and each of the sub-blocks (10), when detached from the remainder of the block (100), may itself be identical to a block (1) as described in any one of the previous examples. In particular, each sub-block comprises one or more insoluble inclusions (3, 3a, 3b) and the sub-blocks (10) and areas (20) may comprise dried premix (2). In this case, the relative weakness of each area (20) is a result of the relative thickness of the area (20) compared to that of the sub-blocks (10).
The areas of relative weakness (20) may alternatively, or additionally, have a composition different from that of a sub-block (10) in such a way as to provide (or increase) the difference in fracture strength between a sub-block (10) and the area (20). For example, the block (100) may be formed in such a manner that the areas (20) are depleted in water-soluble carrier in comparison with the sub-blocks (10).

In use, a user grips a first sub-block (10) in one hand and the remaining sub-blocks (10) in the other hand and then applies a bending force to the block (100) such that the block (100) fractures in the area (20) separating the first sub-block (10) from the remaining sub-blocks (10). The first sub-block is then submerged in water, milk or other aqueous medium to form a beverage and the remainder of the block stored, e.g. in its original packaging, for future use.

**Example 5**

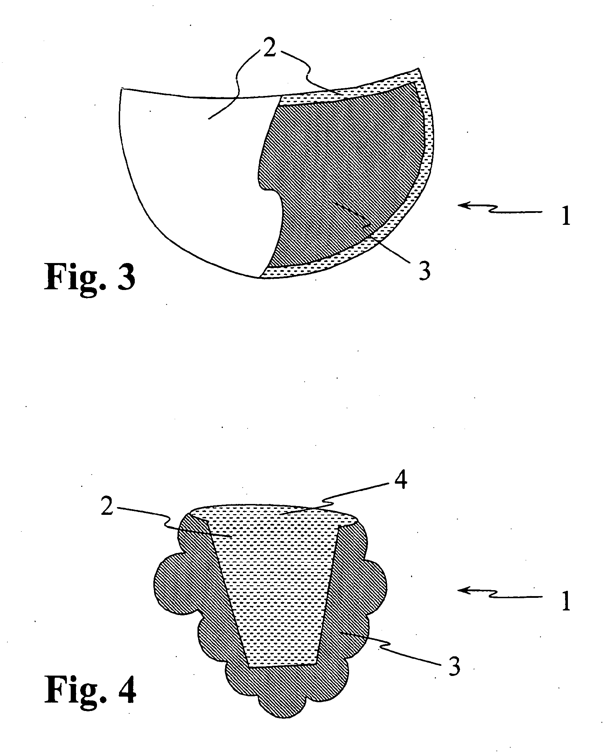

This example demonstrates a beverage precursor block according to the invention in which the block substantially takes the shape of an inclusion.
The block (1) is shown in Figure 3 and comprises a lemon slice (3) encased in a water-soluble coating (2). In its simplest form the water-soluble coating (2) may be plant extract such as tea or coffee solids but may suitably be dried premix as described in one of the previous examples. The coating (2) may be formed, for example, by spraying the plant extract onto a pre-dried lemon slice (3). Alternatively, a fresh lemon slice may be dipped into aqueous plant extract and the resulting coated slice dried, for example by freeze-drying.

**Example 6**

This example demonstrates a further beverage precursor block according to the invention in which the block substantially takes the shape of an inclusion.
The block (1) is shown in Figure 4 and comprises of a whole fruit (3), for example a berry such as a raspberry or strawberry. Within the fruit there is a cavity filled with a water-soluble matrix (2) comprising plant extract. The cavity may be a natural cavity present in the fruit (3) or may be formed, for example, by removing a portion of the fruit (3) by mechanical means such as by boring the fruit (3). The cavity preferably has at least one open end (4) which is such as to allow ingress of aqueous medium during use of the block (1) to prepare a beverage. In its simplest form the water-soluble matrix (2) may be plant extract such as tea or coffee solids but may suitably be dried premix as described in one of the previous examples.

**Example 7**

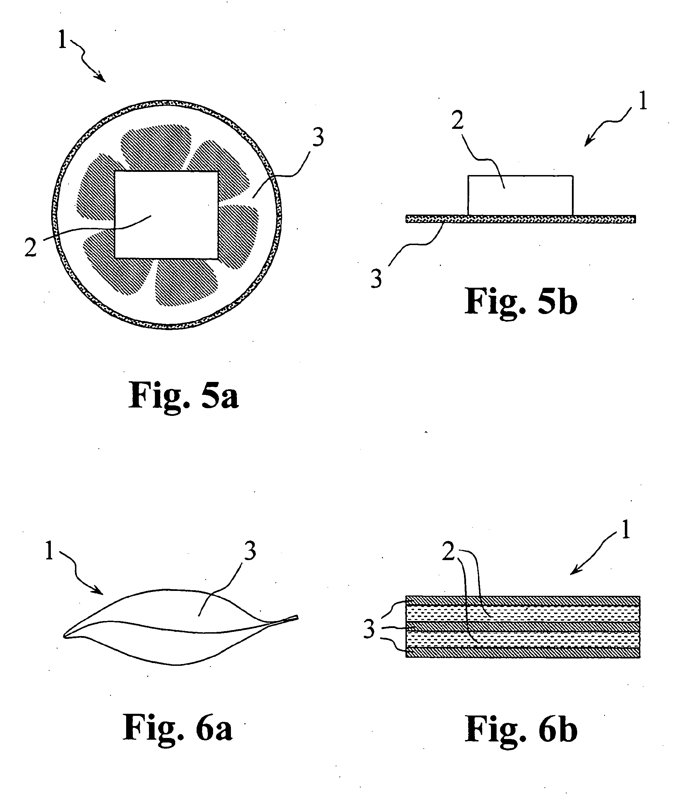

This example demonstrates a further beverage precursor block according to the invention.
The block (1) is shown in Figure 5 and comprises of a lemon slice (3) having fixedly attached thereto a tablet (2) of water-soluble material. The tablet (2) may, for example, be freeze-dried plant extract or freeze-dried premix as described in one of the previous examples. Alternatively, the tablet (2) may be a conventional beverage tablet, e.g. such as the beverage tablets described in US 5,254,355. The block (1) may be manufactured by drying the slice (1) and water-soluble material simultaneously in a suitable mould. Alternatively, the tablet (2) and slice (3) may be dried and then assembled into the block (1), e.g. by fixing the tablet (2) to the slice (3) by means of an edible adhesive.

**Example 8**

This example demonstrates a beverage precursor block according to the invention in which the block comprises a plurality of leaves.
The block (1) is shown in Figure 6 and comprises of a plurality of leaves (3), for example tea or mint leaves, interleaved with layers of water-soluble matrix (2). In its simplest form the water-soluble matrix (2) may be plant extract such as tea or coffee solids but may suitably be dried premix as described in one of the previous examples.

**Example 9**

This example demonstrates the effect of freezing rate on the fracture strength of freeze-dried blocks of water-soluble carrier and plant extract. This example also demonstrates the effect of the density of blocks on their speed of dissolution.

*Materials*

Maltodextrin was GLUCIDEX™21 supplied by Roquette UK Ltd (Corby, UK) and had a DE of 20. Instant tea powder was PG Tips™ Instant supplied by Unilever Bestfoods UK Ltd.

*Formulation*

Two blocks were prepared from two separate premixes. Aqueous premix I comprised 20% (w/w) maltodextrin while aqueous premix II comprised 40% (w/w) maltodextrin. The composition of the aqueous premixes and the final dried blocks are given in Table 4.

TABLE 4

| Ingredient | Composition of Aqueous Premix I (% w/w) | Composition of Block I | Composition of Aqueous Premix II (% w/w) | Composition of Block II |
|---|---|---|---|---|
| Maltodextrin | 20.0 | 4.0 g | 40.0 | 8.0 g |
| Instant Tea Powder | 1.5 | 0.3 g | 1.5 | 0.3 g |
| Water | 78.5 | < 0.4 g | 58.5 | < 0.8 g |

*Process*

Each premix was prepared, frozen and dried in three batches (A, B, and C) in an identical manner to the premix in Example 1, except that no inclusions were added to the premix. Also, a thermocouple was placed in contact with the centre of three filled moulds in each tray and, during freezing, the temperature detected by the thermocouples was logged every 10 minutes and the freezing rate calculated. The freezing rate quoted is the mean of the freezing rate for the three moulds monitored in each batch.

*Properties of the Blocks*

All blocks made from premix I had a mass of approximately 4.5 g and a density of approximately 0.27 g ml$^{-1}$. All blocks made from premix II had a mass of approximately 8.5 g and a density of approximately 0.52 g ml$^{-1}$. The higher density of the blocks made from premix II is caused by the lower water content of premix II compared to premix I and hence the smaller amount of voids created during the drying process.
The freezing rates and mechanical properties of the blocks are shown in Table 5.

TABLE 5

| Property | Sample I | | | Sample II | | |
|---|---|---|---|---|---|---|
| | Batch A | Batch B | Batch C | Batch A | Batch B | Batch C |
| Freezing Rate (K min$^{-1}$). | 0.10 | 0.32 | 0.48 | 0.12 | 0.27 | 0.48 |
| Fracture Strength (kPa) | 44 | 92 | 67 | 179 | 733 | 226 |

The data in Table 5 illustrate that freezing rate has a dramatic effect on the strength of freeze-dried blocks. In particular, freezing rates in excess of 0.15 K min$^{-1}$ produce blocks of adequate strength with even the low density blocks of sample I.
A block from each batch of each sample was used to prepare a beverage by placing the block in a cup and pouring 100 ml of boiling water over the block. Each block of sample I was observed to dissolve instantaneously (i.e. in less than 2 s) without stirring. In contrast, the higher density blocks of sample II all required stirring for 30 to 60 seconds to ensure dissolution.

**Example 10**

This example demonstrates the superior flavour delivery of beverage precursor blocks according to the invention in comparison to a simple mixture of powdered ingredients.

*Preparation of beverages*

Two dry mixes, mix 10 and mix 30, were prepared to have a composition equivalent to that of seven of the beverage blocks of Example 1 and 3 respectively. The dry mixes were prepared by simply mixing the powdered maltodextrin and tea by hand with a spoon and then gently mixing in the appropriate freeze-dried inclusions. The compositions of the dry mixes are given in Table 6.

TABLE 6

| Ingredient | Composition of mix 10 | Composition of mix 30 |
|---|---|---|
| Maltodextrin | 19.60 g | 14.00 g |
| PG Tips™ Instant | 2.10 g | - |
| Std.609 | - | 2.45 g |
| Raspberries (freeze-dried) | 14 × Whole | - |
| Vanilla Pods (freeze-dried) | 7 × 5 mm Piece | - |
| Lemon (freeze-dried) | - | 7 slices |

Four beverages were then prepared in bulk by either dissolving the quantities of dry mix stated in Table 6, or seven of the beverage blocks of Example 1 or 3, in 1400 ml of boiling water. 1 minute after adding the boiling water, each of the bulk beverages was strained through 2 layers of muslin to remove the inclusions and transferred to vacuum flasks.

*Experimental Design and assessment Conditions*

Panellists were served 75 ml of each beverage in a white china bowl filled directly from the vacuum flasks.
Firstly, panellists were served the two raspberry/vanilla beverages (i.e. the beverages made from the blocks of Example 1 or from dry mix 10) and asked the following questions:

• Which sample has the strongest fruity aroma?
• Which sample has the strongest vanilla flavour?
• Which sample has the strongest sweet taste?

Secondly, panellists were served the two lemon beverages (i.e. the beverages made from the blocks of Example 3 or from dry mix 30) and asked to answer the following questions:

• Which sample has the strongest citrus aroma?
• Which sample has the strongest lemon flavour?
• Which sample has the strongest sour taste?

A total of 49 expert panellists carried out the assessments.
All attributes were assessed under red lights. A soupspoon was provided for the assessment of samples. Water, melon and crackers were also provided for palate cleansing between tests.

*Results*

Results of the paired comparison tests were collated and analysed using two-tailed binomial tests with a 95% confidence level.

Raspberry/Vanilla:

39 out of 49 panellists chose the beverage made from the blocks of Example 1 to be the sample with the strongest fruity aroma. This indicates that the beverage made from the blocks according to the invention was significantly stronger in fruity aroma than the dry mix product (p=0.001).
34 out of 49 panellists chose the beverage made from the blocks of Example 1 to be the sample with the strongest vanilla flavour. This indicates that that the beverage made from the blocks according to the invention is significantly stronger in vanilla flavour than the dry mix product (p=0.009).

27 out of 49 panellists chose the beverage made from the blocks of Example 1 to be the sample with the strongest sweet taste. This indicates that the panel failed to detect a difference in sweet taste between the two products assessed (p=0.568).

Lemon:

45 out of 49 panellists chose the beverage made from the blocks of Example 3 to be the sample with the strongest citrus aroma. This indicates that the beverage made from the blocks according to the invention is significantly stronger in citrus aroma than the dry mix product (p=0.001).

34 out of 49 panellists chose the beverage made from the blocks of Example 3 to be the sample with the strongest lemon flavour. This indicates that the beverage made from the blocks according to the invention is significantly stronger in lemon flavour than the dry mix product (p=0.009).

28 out of 49 panellists chose the beverage made from the blocks of Example 3 to be the sample with the strongest sour taste. This indicates that the panel failed to detect a difference in sour taste between the two products assessed (p=0.392).

*Conclusion*

The results have shown that the beverages made from the beverage precursor blocks of the present invention deliver significantly more fruity aroma and vanilla flavour than an equivalent dry mix for the raspberry/vanilla variant. For the lemon variant, the blocks of the present invention deliver significantly more citrus aroma and lemon flavour than the dry mix.

**Claims**

1.  A dried beverage precursor block weighing at least 0.2 g, and comprising:

    (A) plant extract; and
    (B) at least one insoluble inclusion which is insoluble in boiling water.

2.  A beverage precursor block according to claim 1 wherein the block comprises water in an amount of less than 30% by weight of the block.

3.  A beverage precursor block according to claim 2 wherein the block comprises water in an amount of from 1 to 15% by weight of the block.

4.  A beverage precursor block according to any one of claims 1 to 3 wherein the block weighs at least 1 g.

5.  A beverage precursor block according to any one of claims 1 to 4 wherein the plant extract is in an amount of at least 2% by weight of the block.

6.  A beverage precursor block according to any one of claims 1 to 5 wherein the at least one insoluble inclusion has a maximum linear dimension of at least 1 mm.

7.  A beverage precursor block according to claim 6 wherein the at least one insoluble inclusion has a maximum linear dimension of at least 5 mm.

8.  A beverage precursor block according to any one of claims 1 to 7 wherein the at least one insoluble inclusion comprises plant material.

9.  A beverage precursor block according to claim 8 wherein the plant material is selected from the group consisting of whole fruit, fruit pieces, whole leaves, leaf pieces, whole pods, pod pieces, whole seeds, seed pieces, whole beans, bean pieces, whole roots, root pieces, whole nuts, nut pieces, whole flowers, flower pieces and mixtures thereof.

10. A beverage precursor block according to any one of claims 1 to 9 additionally comprising water-soluble carrier.

**11.** A beverage precursor block according to claim 10 wherein the amount of water-soluble carrier is at least 40% by weight of the block.

**12.** A beverage precursor block according to any one of claims 1 to 11 wherein the block has a density in the range of 0.05 to 0.5 g ml$^{-1}$.

**13.** A beverage precursor block according to any one of claims 1 to 12 wherein the block has a fracture strength of at least 50 kPa.

**14.** A beverage precursor block according to any one of claims 1 to 13 wherein the plant extract is selected from the group consisting of tea solids, coffee solids, cocoa solids, fruit solids and mixtures thereof.

**15.** A beverage precursor block according to claim 14 wherein the plant extract comprises tea solids.

**16.** A packaged beverage precursor comprising at least one beverage precursor block according to any one of claims 1 to 15.

**17.** A packaged beverage precursor according to claim 16 comprising a plurality of the beverage precursor blocks.

**18.** A packaged beverage precursor according to claim 17 wherein the plurality of beverage precursor blocks are substantially identical.

**19.** A method of preparing a beverage comprising the steps of:

    (a) providing a beverage precursor block according to any one of claims 1 to 15; and
    (b) contacting the block or a part thereof with an aqueous medium.

**20.** A process for the manufacture of a beverage precursor block, the process comprising the steps of:

    (i) providing aqueous premix comprising plant extract;
    (ii) providing one or more insoluble inclusions which are insoluble in boiling water;
    (iii) combining the one or more insoluble inclusions with the aqueous premix to form a mixture; and
    (iv) drying the mixture.

**21.** A process according to claim 20 wherein the aqueous premix further comprises water-soluble carrier.

**22.** A process according to claim 20 or 21 wherein step (iv) comprises freeze-drying of the mixture.

**23.** A process according to claim 22 wherein the mixture is frozen at a rate of at least 0.15 K min$^{-1}$ and then dried under vacuum.

**24.** A process according to any one of claims 20 to 23 wherein the aqueous premix has a water content of at least 50% by weight of the aqueous premix.

**25.** A process according to any one of claims 20 to 24 comprising the further step of:

    (v) dividing out a cohesive portion of the mixture, the portion having a dry mass of at least 0.2 g and the portion forming the block when dried.

**26.** A process according to claim 25 wherein the portion has a dry mass of at least 1 g.

**27.** A process according to claim 25 or 26 wherein the portion has a dry mass of less than 300 g.

**28.** A process according to any one of claims 25 to 27 wherein step (iv) is performed before step (V).

**29.** A process according to any one of claims 25 to 27 wherein step (v) is performed before step (iv).

**30.** A process according to any one of claims 20 to 29 wherein the process comprises the additional step of packaging the beverage precursor block.

31. A process according to claim 30 wherein the beverage precursor block is packaged with one or more additional beverage precursor blocks.

**Patentansprüche**

1. Getrockneter Getränkvorläuferblock, der wenigstens 0,2 g wiegt und umfasst:

   (A) Pflanzenextrakt und
   (B) wenigstens einen unlöslichen Einschluss, der in siedendem Wasser unlöslich ist.

2. Getränkvorläuferblock gemäß Anspruch 1, wobei der Block Wasser in einer Menge von weniger als 30 Gewichts-% des Blocks umfasst.

3. Getränkvorläuferblock gemäß Anspruch 2, wobei der Block Wasser in einer Menge von 1 bis 15 Gewichts-% des Blocks umfasst.

4. Getränkvorläuferblock gemäß einem der Ansprüche 1 bis 3, wobei der Block wenigstens 1 g wiegt.

5. Getränkvorläuferblock gemäß einem der Ansprüche 1 bis 4, wobei der Pflanzenextrakt in einer Menge von wenigstens 2 Gewichts-% des Blocks ist.

6. Getränkvorläuferblock gemäß einem der Ansprüche 1 bis 5, wobei der wenigstens eine unlösliche Einschluss eine maximale lineare Abmessung von wenigstens 1 mm hat.

7. Getränkvorläuferblock gemäß Anspruch 6, wobei der wenigstens eine unlösliche Einschluss eine maximale lineare Abmessung von wenigstens 5 mm hat.

8. Getränkvorläuferblock gemäß einem der Ansprüche 1 bis 7, wobei der wenigstens eine unlösliche Einschluss Pflanzenmaterial umfasst.

9. Getränkvorläuferblock gemäß Anspruch 8, wobei das Pflanzenmaterial aus der Gruppe, bestehend aus ganzer Frucht, Fruchtstücken, ganzen Blättern, Blattstücken, Schoten, Schotenstücken, ganzen Samen, Samenstücken, ganzen Bohnen, Bohnenstücken, ganzen Wurzeln, Wurzelstücken, ganzen Nüssen, Nussstücken, ganzen Blüten, Blütenstücken und Gemischen davon, ausgewählt ist.

10. Getränkvorläuferblock gemäß einem der Ansprüche 1 bis 9, der zusätzlich wasserlöslichen Träger umfasst.

11. Getränkvorläuferblock gemäß Anspruch 10, wobei die Menge an wasserlöslichem Träger wenigstens 40 Gewichts-% des Blocks ist.

12. Getränkvorläuferblock gemäß einem der Ansprüche 1 bis 11, wobei der Block eine Dichte im Bereich von 0,05 bis 0,5 g ml$^{-1}$ hat.

13. Getränkvorläuferblock gemäß einem der Ansprüche 1 bis 12, wobei der Block eine Bruchfestigkeit von wenigstens 50 kPa hat.

14. Getränkvorläuferblock gemäß einem der Ansprüche 1 bis 13, wobei der Pflanzenextrakt aus der Gruppe, bestehend aus Teefeststoffen, Kaffeefeststoffen, Kakaofeststoffen, Fruchtfeststoffen und Gemischen davon, ausgewählt ist.

15. Getränkvorläuferblock gemäß Anspruch 14, wobei der Pflanzenextrakt Teefeststoffe umfasst.

16. Abgepackter Getränkvorläufer, der wenigstens einen Getränkvorläuferblock gemäß einem der Ansprüche 1 bis 15 umfasst.

17. Abgepackter Getränkvorläufer gemäß Anspruch 16, der eine Vielzahl der Getränkvorläuferblöcke umfasst.

**18.** Abgepackter Getränkvorläufer gemäß Anspruch 17, wobei die Vielzahl von Getränkvorläuferblöcken im Wesentlichen identisch ist.

**19.** Verfahren zur Herstellung eines Getränks, umfassend die Schritte:

(a) Bereitstellen eines Getränkvorläuferblocks gemäß einem der Ansprüche 1 bis 15 und
(b) In-Kontakt-Bringen des Blocks oder eines Teils davon mit einem wässrigen Medium.

**20.** Verfahren für die Herstellung eines Getränkvorläuferblocks, wobei das Verfahren die Schritte:

(i) Bereitstellen einer wässrigen Vormischung, die Pflanzenextrakt umfasst;
(ii) Bereitstellen eines unlöslichen Einschlusses oder mehrerer unlöslicher Einschlüsse, der/die in siedendem Wasser unlöslich ist/sind;
(iii) Kombinieren des einen unlöslichen Einschlusses oder der mehreren unlöslichen Einschlüsse mit der wässrigen Vormischung unter Bildung eines Gemisches und
(iv) Trocknen des Gemisches

umfasst.

**21.** Verfahren gemäß Anspruch 20, wobei die wässrige Vormischung außerdem wasserlöslichen Träger umfasst.

**22.** Verfahren gemäß Anspruch 20 oder 21, wobei Schritt (iv) Gefriertrocknung des Gemisches umfasst.

**23.** Verfahren gemäß Anspruch 22, wobei das Gemisch mit einer Rate von wenigstens 0,15 K min$^{-1}$ gefroren wird und dann unter Vakuum getrocknet wird.

**24.** Verfahren gemäß einem der Ansprüche 20 bis 23, wobei die wässrige Vormischung einen Wassergehalt von wenigstens 50 Gewichts-% der wässrigen Vormischung hat.

**25.** Verfahren gemäß einem der Ansprüche 20 bis 24, das den weiteren Schritt:

(v) Abtrennen eines kohäsiven Teil des Gemisches, wobei der Teil eine trockene Masse von wenigstens 0,2 g hat und der Teil den Block bildet, wenn er getrocknet ist.

**26.** Verfahren gemäß Anspruch 25, wobei der Teil eine trockene Masse von wenigstens 1 g hat.

**27.** Verfahren gemäß Anspruch 25 oder 26, wobei der Teil eine trockene Masse von weniger als 300 g hat.

**28.** Verfahren gemäß einem der Ansprüche 25 bis 27, wobei Schritt (iv) vor Schritt (v) durchgeführt wird.

**29.** Verfahren gemäß einem der Ansprüche 25 bis 27, wobei Schritt (v) vor Schritt (iv) durchgeführt wird.

**30.** Verfahren gemäß einem der Ansprüche 20 bis 29, wobei das Verfahren den zusätzlichen Schritt des Abpackens des Getränkvorläuferblocks umfasst.

**31.** Verfahren gemäß Anspruch 30, wobei der Getränkvorläuferblock mit einem oder mehreren zusätzlichen Getränkvorläuferblöcken abgepackt wird.

**Revendications**

**1.** Bloc précurseur de boisson séché pesant au moins 0,2 g, et comprenant :

(A) un extrait végétal ; et
(B) au moins une inclusion insoluble qui est insoluble dans de l'eau en ébullition.

**2.** Bloc précurseur de boisson selon la revendication 1, dans lequel le bloc comprend de l'eau dans une quantité inférieure à 30 % en poids du bloc.

3. Bloc précurseur de boisson selon la revendication 2, dans lequel le bloc comprend de l'eau dans une quantité de 1 à 15 % en poids du bloc.

4. Bloc précurseur de boisson selon une quelconque des revendications 1 à 3, dans lequel le bloc pèse au moins 1 g.

5. Bloc précurseur de boisson selon une quelconque des revendications 1 à 4, dans lequel l'extrait végétal est dans une quantité d'au moins 2 % en poids du bloc.

6. Bloc précurseur de boisson selon une quelconque des revendications 1 à 5, dans lequel l'au moins une inclusion insoluble possède une dimension linéaire maximum d'au moins 1 mm.

7. Bloc précurseur de boisson selon la revendication 6, dans lequel l'au moins une inclusion insoluble possède une dimension linéaire maximum d'au moins 5 mm.

8. Bloc précurseur de boisson selon une quelconque des revendications 1 à 7, dans lequel l'au moins une inclusion insoluble comprend une matière végétale.

9. Bloc précurseur de boisson selon la revendication 8, dans lequel la matière végétale est sélectionnée parmi le groupe constitué de fruits entiers, de morceaux de fruit, de feuilles entières, de morceaux de feuille, de cosses entières, de morceaux de cosse, de graines entières, de morceaux de graine, de fèves entières, de morceaux de fève, de racines entières, de morceaux de racine, de noix entières, de morceaux de noix, de fleurs entières, de morceaux de fleur et de mélanges de ceux-ci.

10. Bloc précurseur de boisson selon une quelconque des revendications 1 à 9, comprenant en outre un support hydrosoluble.

11. Bloc précurseur de boisson selon la revendication 10, dans lequel la quantité de support hydrosoluble est au moins 40 % en poids du bloc.

12. Bloc précurseur de boisson selon une quelconque des revendications 1 à 11, dans lequel le bloc possède une densité dans la plage de 0,05 à 0, 5 g ml$^{-1}$.

13. Bloc précurseur de boisson selon une quelconque des revendications 1 à 12, dans lequel le bloc possède une résistance à la rupture d'au moins 50 kPa.

14. Bloc précurseur de boisson selon une quelconque des revendications 1 à 13, dans lequel l'extrait végétal est sélectionnée parmi le groupe constitué de matières solides de thé, de matières solides de café, de matières solides de cacao, de matières solides de fruit et de mélanges de ceux-ci.

15. Bloc précurseur de boisson selon la revendication 14, dans lequel l'extrait végétal comprend des matières solides de thé.

16. Précurseur de boisson conditionné comprenant au moins un bloc précurseur de boisson selon une quelconque des revendications 1 à 15.

17. Précurseur de boisson conditionné selon la revendication 16, comprenant une pluralité des blocs précurseurs de boisson.

18. Précurseur de boisson conditionné selon la revendication 17, dans lequel la pluralité de blocs précurseurs de boisson sont sensiblement identiques.

19. Méthode de préparation d'une boisson, comprenant les étapes consistant à :

   (a) fournir un bloc précurseur de boisson selon une quelconque des revendications 1 à 15 ; et
   (b) mettre en contact le bloc ou une partie de celui-ci avec un milieu aqueux.

20. Procédé pour la fabrication d'un bloc précurseur de boisson, le procédé comprenant les étapes consistant à :

(i) fournir un prémélange aqueux comprenant un extrait végétal ;
(ii) fournir une ou plusieurs inclusions insolubles qui sont insolubles dans de l'eau en ébullition ;
(iii) associer la ou les inclusions insolubles avec le prémélange aqueux pour former un mélange ; et
(iv) sécher le mélange.

**21.** Procédé selon la revendication 20, dans lequel le prémélange aqueux comprend en outre un support hydrosoluble.

**22.** Procédé selon la revendication 20 ou 21, dans lequel l'étape (iv) comprend la lyophilisation du mélange.

**23.** Procédé selon la revendication 22, dans lequel le mélange est lyophilisé à un taux d'au moins 0,15 K min$^{-1}$ et puis séché sous vide.

**24.** Procédé selon une quelconque des revendications 20 à 23, dans lequel le prémélange aqueux possède une teneur en eau d'au moins 50 % en poids du prémélange aqueux.

**25.** Procédé selon une quelconque des revendications 20 à 24, comprenant l'étape supplémentaire consistant à :

(v) diviser une portion cohésive du mélange, la portion possédant une masse sèche d'au moins 0,2 g et la portion formant le bloc une fois que le séchage est réalisé.

**26.** Procédé selon la revendication 25, dans lequel la portion possède une masse sèche d'au moins 1 g.

**27.** Procédé selon la revendication 25 ou 26, dans lequel la portion possède une masse sèche inférieure à 300 g.

**28.** Procédé selon une quelconque des revendications 25 à 27, dans lequel l'étape (iv) est réalisée avant l'étape (V).

**29.** Procédé selon une quelconque des revendications 25 à 27, dans lequel l'étape (v) est réalisée avant l'étape (iv).

**30.** Procédé selon une quelconque des revendications 20 à 29, dans lequel le procédé comprend l'étape supplémentaire consistant à conditionner le bloc précurseur de boisson.

**31.** Procédé selon la revendication 30, dans lequel le bloc précurseur de boisson est conditionné avec un ou plusieurs blocs précurseurs de boisson supplémentaires.

**Fig. 1a**

3a

2

1

3b

**Fig. 1b**

3

2

1

**Fig. 1c**

3

1

2

100

10

20

20

20

**Fig. 2**

**Fig. 3**

**Fig. 4**

Fig. 5a

Fig. 5b

Fig. 6a

Fig. 6b

**REFERENCES CITED IN THE DESCRIPTION**

**Patent documents cited in the description**

- US 5254355 A